# EUROPÄISCHE PATENTSCHRIFT

(11) **EP 2 223 125 B1**
(45) Veröffentlichungstag und Bekanntmachung des Hinweises auf die Patenterteilung: **14.03.2012**
(21) Anmeldenummer: 08859576.4
(22) Anmeldetag: 09.12.2008
(51) Int. Cl.: G01P 1/02

(54) **MAGNETFELD-SENSORELEMENT**
MAGNETIC FIELD SENSOR ELEMENT
ÉLÉMENT DE DÉTECTION DE CHAMP MAGNÉTIQUE

(30) Priorität: 13.12.2007 DE 102007060604
(43) Veröffentlichungstag der Anmeldung: 01.09.2010
(73) Patentinhaber: Continental Teves AG & Co. oHG, 60488 Frankfurt (DE)
(72) Erfinder: GRUBER, Jürgen, 61462 Königstein (DE); GOLL, Manfred, 63695 Glauburg 2 (DE); WATZLAWIK, Martin, 63477 Maintal (DE)
(86) Internationale Anmeldenummer: PCT/EP2008/067135
(87) Internationale Veröffentlichungsnummer: WO 2009/074582

(56) Entgegenhaltungen:
- EP-A- 0 340 418
- EP-A- 1 262 779
- EP-A- 1 837 886
- EP-A- 1 864 090
- EP-B- 0 804 329
- JP-A- 2006 275 639

## Beschreibung

Die Erfindung bezieht sich auf eine Sensoreinheit mit mindestens einem ASIC und mindestens einem Magneten auf mindestens einem Leadframe, wobei alle Elemente in einem Kapselgehäuse angeordnet sind, das von einer Sensorumspritzung umgeben ist.

Eines der Einsatzgebiete für Magnetfeld-Sensorelemente sind beispielsweise Kraftfahrzeuge. Dabei kann zu ihren Aufgaben der Einsatz in Luftfedern gehören, um in einer Niveau-Messeinrichtung das Fahrzeugniveau zu bestimmen. Die DE 100 23 622 B4 beschreibt hierzu die Nutzung der von einem Magnetfeld-Sensorelement sensierten Magnetfeldstärke eines Permanent-Magneten zur Niveaubestimmung.

Ebenso können Magnetfeld-Sensorelemente zur Steuerung eines Hubkolben-Verbrennungsmotors, wie er typischerweise in einem Kraftfahrzeug Verwendung findet, eingesetzt werden. Die DE 10 2005 035 881 A1 sowie die EP 1 310 634 zeigen den Einsatz von Magnetfeld-Sensorelementen zur Erfassung der Drehwinkellage einer Nockenwelle auf, woraus die notwendigen Werte zur Verstellung der Nockenwelle relativ zur Kurbelwelle berechnet werden können.

Auch zur Erfassung der Umgebung eines Kraftfahrzeuges als Bestandteil einer Sicherheitseinrichtung können Magnetfeld-Sensorelemente zum Einsatz kommen. Dabei werden Bildinformationen, wie in der DE 102 12 483 A1 beschrieben, aus der Umgebung des Kraftfahrzeuges, beispielsweise von ortsfesten und/oder beweglichen Gegenständen und/oder Verkehrsteilnehmern, aufgenommen und bewertet, wobei zu der Bewertung eine Auslösung eines oder mehrerer Airbags, abhängig von der Sitzplatzbelegung im Kraftfahrzeug, erfolgen kann. Auch eine Kopplung mit einem Einparksystem ist möglich.

Magnetfeld-Sensorelemente werden beispielsweise zur Ermittlung der Raddrehzahl, also der Umdrehungsgeschwindigkeit eines Rades, eingesetzt werden. Hierbei handelt es sich um so genannte Wheel Speed Sensoren.

Die Drehzahlermittlung erfolgt typischerweise über den Einsatz von drei Elementen:
- Sensor mit Sensorkopf
- Magnetspur (Encoder)
- Luftspalt zwischen den beiden Hardware-Elementen

Magnetfeld-Sensorelemente verfügen bauartbedingt nur über eine geringe Reichweite. Ihre Positionierung sollte daher für eine gute Funktion möglichst nahe an der aufnehmenden Magnetspur, dem sogenannten Encoder, erfolgen.

Wheel Speed Sensoren arbeiten üblicherweise mit zwei unterschiedlichen Arten von Encodern:

### Ferromagnetischer Encoder

Der ferromagnetische Encoder beeinflusst das Magnetfeld, das durch den Magneten des Sensorelementes erzeugt wird.

### Magnetisierter Encoder

Der magnetisierte Encoder erzeugt sein eigenes Magnetfeld. Er besteht typischerweise aus Elastomer mit einem so genannten Filler mit einem Ferrit-Anteil von 20 %.

Die Vorteile eines magnetisierten Encoders liegen darin, dass er einfach in andere mechanische Bauteile und/oder Baugruppen integriert werden kann, vorzugsweise in der Dichtung des Radlagers. Er kann aber auch eine zusätzliche, eigenständige Funktion als Dichtung des Radlagers übernehmen. Die Sensorelemente für den magnetisierten Encoder benötigen aufgrund ihrer Technologie wenig Platz und ermöglichen daher einen besonders kleinen Sensorkopf.

Es sind Raddrehzahlsensoren bekannt, deren gehäuste Magnetfeld-Sensorelemente, also Brücken Die, Asic, Magnete, Leadframe mit Epoxy umspritzt, in vorgefertigte Kunststoff- oder Kunststoff-Metall-Einleger, so genannte Carrier, oder in eine die Aufgabe erfüllende Vorumspritzung, so genannte Pre-Molds, zur lagegenauen Positionierung zu montieren sind.

Diese Carrier oder Pre-Molds werden im Umspritzwerkzeug positionsgenau für die Sensoreinheit mit Magnetfeld-Sensorelement (Lesekopf) gehalten, um die Lagegenauigkeit des Sensorelements bei der Umspritzung zum Fertigsensor zu gewährleisten. Die notwendige Dichtheit der Sensoren im Bereich der Carrier-Haltepunkte wird hier durch die Kunststoff-Materialverbindung zur Umspritzung der Sensoreinheit erreicht sowie durch die Ausbildung einer Anzahl von Schmelzrippen an den Haltepunkten.

Der Erfindung liegt die Aufgabe zugrunde, ein vorgefertigtes Magnetfeld-Sensorelement der genannten Art anzugeben, das mit kleineren Abmessungen im Umspritzwerkzeug mit geringerem Aufwand und zudem lagegenau positioniert werden kann.

Diese Aufgabe wird erfindungsgemäß gelöst, indem das Kapselgehäuse eine Anzahl von in ihren Außenabmessungen an eine der Sensorumspritzung zugeordnete Spritzgussform angepassten Fixierhilfen aufweist.

Vorteilhafte Ausgestaltungen der Erfindung sind Gegenstand der Unteransprüche.

Die Erfindung geht von der Überlegung aus, dass für die Endumspritzung des Sensorelementes Fixierhilfen notwendig sind, die die lagegenaue Position des Sensorelementes dadurch sicherstellen, dass sie sich im Werkzeug der Sensorendumspritzung abstützen.

Um eine möglichst kostengünstige Fertigung zu erzielen, sollen nicht notwendige Fertigungszwischenschritte oder Bauelemente zur Positionierung des gehäusten Sensorelementes eingespart werden. Ein Standardbauteil wie der zur lagegenauen Positionierung verwendete Carrier kann dadurch ersetzt werden, dass die komplette Sensoreinheit im Umspritzwerkzeug fixiert wird, indem an das Kapselgehäuse vorteilhafterweise eine Anzahl von Fixierhilfen, die mindestens eine Dichtkomponente zur Endumspritzung umfassen, angeordnet ist.

Damit in der Fertigung für die Sensoreinheit ein Standardbauteil ohne angeordnete Fixierhilfen verwendet werden kann, wodurch die entstehenden Kosten gesenkt werden können, werden diese vorteilhafterweise nachträglich in der Art von Schalenpaaren an das Kapselgehäuse angelegt oder angeklebt.

Um für die Sensoreinheit ein Standardbauteil verwenden zu können und somit Kosten sparen zu können und/oder bei eventuell auftretenden Platzproblemen nicht an ein vorgegebenes Design des gehäusten Sensorelementes gebunden zu sein, sind die Fixierhilfen vorteilhafterweise nicht am Kapselgehäuse selbst, sondern am mit dem Kapselgehäuse verbundenen Leadframe angeordnet.

Um die Lebensdauer der Kabelverbindung zwischen dem Magnetfeld-Sensorelement und der zugeordneten Elektronik im Kraftfahrzeug zu erhöhen und eine Belastung der Kontakte durch Zugbelastung beispielsweise bei Wartungsarbeiten oder durch äußere Einflüsse im Straßenverkehr weitestgehend zu vermeiden sowie eine alternative Fixierung für die Umspritzung bereitzustellen, umfasst der Leadframe und/oder das Kabel für den Anschluss des Sensor-Steckerpins vorteilhafterweise eine Zugentlastung, wobei es sich dabei auch um eine als Zugentlastung ausgebildete Fixierhilfe handeln kann.

Damit zwischen der Beschichtung des Kapselgehäuses und der späteren Umspritzungsmasse des Kapselgehäuses eine dichte Verbindung erzielt werden kann und an den Kontaktflächen keine Feuchtigkeit eindringt, ist vorteilhafterweise der gleiche Werkstoff für die Beschichtung des Kapselgehäuses als auch für die Sensorumspritzung vorgesehen, wobei es sich bei diesem Werkstoff zweckmäßigerweise um PA (Polyamid), PU (Polyurethan) oder PBT handelt.

Die mit der Erfindung erzielten Vorteile bestehen insbesondere darin, dass sich das Kapselgehäuse durch die integrierten Positionierhilfen direkt und lagegenau, ohne weitere Hilfsmittel, die aus zusätzlichen Bauteilen und/oder werkzeugseitigen Stützelementen bestehen könnten, oder eine entsprechende Zwischenumspritzung im Sensor-Umspritzwerkzeug positioniert und somit ein Sensor mit kleineren Abmessungen Verwendung finden kann. Des Weiteren sind durch die integrierten Positionierhilfen gute Voraussetzungen für eine Dichtheit des Sensors gegeben, da er durch die Umspritzung vollständig abgedichtet wird und die Kontaktierungsfläche der umspritzten Sensoreinheit mit der Werkzeugkontur der Au-βenumspritzung besonders gering ist. Daher ist kein externer Schutz gegen Feuchtigkeit und/oder Schmutz notwendig. Auch sind Service- und/oder Wartungsarbeiten sowie Austausch ohne Ausbau des Radlagers möglich.

Ein Ausführungsbeispiel der Erfindung wird anhand einer Zeichnung näher erläutert. Darin zeigen:
- Fig. 1: den Aufbau eines Raddrehzahlsensors und Sensorkopfs herkömmlicher Bauart in schematischen, unterschiedlichen Ansichten,
- Fig. 2: das (erfindungsgemäße) Sensorelement mit Positionierhilfen in Schnitt,
- Fig. 3: eine alternative Anordnung der Elemente im Schnitt,
- Fig. 4: eine alternative Fixierung des Leadframes im Schnitt, und
- Fig. 5: den Raddrehzahlsensor mit Sensorkopf im Schnitt.

Gleiche Teile sind in allen Figuren mit denselben Bezugszeichen versehen.

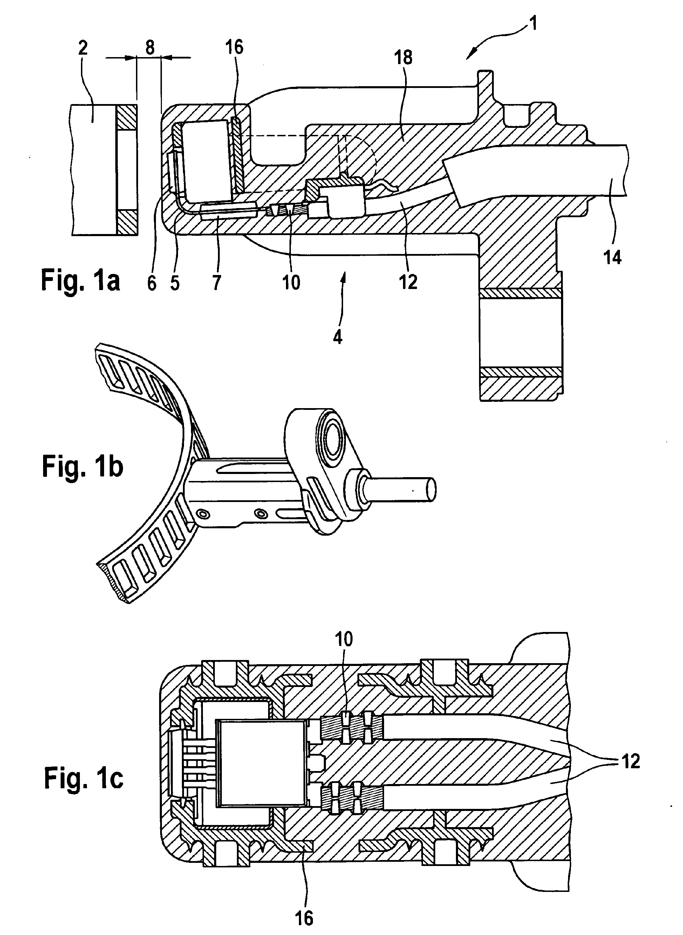

Die Fig. 1 a) bis c) zeigen schematisch ein bespielhaftes Raddrehzahlsensor-System 1 in herkömmlicher Bauart aus verschiedenen Ansichten. Zwischen dem Encoder 2, der als magnetisierter Encoder oder als ferromagnetischer Encoder ausgeführt sein kann, und dem Sensorkopf 4 mit der Sensoreinheit 5, die das Magnetfeld-Sensorelement 6 (Lesekopf) und den ASIC 7 (ASIC = anwendungsspezifische integrierte Schaltung, engl. application specific integrated circuit, eine als integrierter Schaltkreis ausgeführte elektronische Schaltung) umfasst, besteht ein Luftspalt 8. Da die Sensoreinheit 6 nur eine begrenzte Reichweite aufweist, ist sie so nahe wie möglich zur Magnetspur, also dem Encoder 2, zu positionieren.

In der Fig. 1 a) ist dabei beispielgemäß ein Sensorkopf 4 in Standardbauweise dargestellt. Er umfasst die Sensoreinheit 5 mit einem Magnetfeld-Sensorelement 6, eine Anzahl von elektrischen Leitern 12 vom/zum Magnetfeld-Sensorelement 6, die in einer Schutzumhüllung 14 aus dem Sensorkopf 4 herausgeführt sind, sowie einen Carrier 16, der die lagegenaue Positionierung des Magnetfeld-Sensorelements 6 im Sensorkopf 4 sicherstellen soll.

Die elektrischen Leiter 12, die üblicherweise als Kabel ausgeführt sind, sind beispielsweise über Crimpkontakte 10 am Carrier 16 angebunden. Dadurch wird eine Zugentlastung erreicht, da auch bei Beanspruchung der aus dem Sensorkopf 4 herausgeleiteten elektrischen Leiter 12 auf Zug, z. B. bei Servicearbeiten und/oder Austausch, keine Kräfte auf die Sensoreinheit 5 einwirken können, sondern diese bereits am Carrier 16 abgefangen werden.

Die Sensoreinheit 5 mit dem Magnetfeld-Sensorelement 6, dem Carrier 16 und der Anzahl von elektrischen Leitern 12 ist von einer Umspritzung 18 umgeben, die zum Schutz des Sensorkopfs 4 und der Sensoreinheit 5 vor Feuchtigkeit und Schmutz dient.

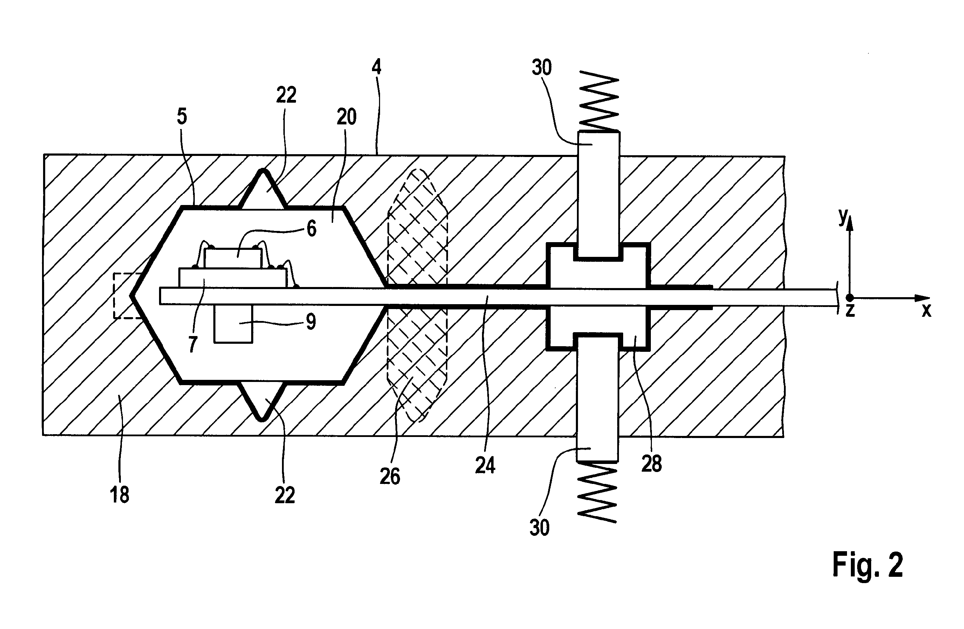

Beim Einspritzen des Umschließungsmaterials in das Werkzeug zur Umspritzung der Sensoreinheit 5 ist es wichtig, dafür Sorge zu tragen, dass die Sensoreinheit 5 im Sensorkopf 4 genau positioniert wird. Wie die Fig. 2 zeigt, ist der Sensorkopf 4 am Carrier 16 befestigt. Aber auch der Carrier 16 benötigt eine Positionierungshilfe im Werkzeug für die Umspritzung 18, um die Lagegenauigkeit der Sensoreinheit 5 zum Encoder 2 zu gewährleisten. Dazu wird der Carrier 16 nach aktuellem Stand der Technik für die Dauer der Umspritzung über Stifte 19 gehalten. Diese Stifte 19 werden nach erfolgter Umspritzung herausgezogen.

Die Fig. 2 veranschaulicht, wie die Sensoreinheit 5 im Sensorkopf 4 positioniert werden kann. Bei diesem Sensorkopf 4 handelt es sich aber, im Gegensatz zu den in Fig. 1 a) bis c) dargestellten Versionen im Stand der Technik, bereits um die Version gemäß der Erfindung mit im Sensorkopf 4 integrierten Magnetfeld-Sensorelement 6 und ASIC 7.

Die Sensoreinheit 5 befindet sich in einem Kapselgehäuse 20 und umfasst üblicherweise eine Anzahl von Sensorelementen, Asic, Leadframe, Magneten sowie für bestimmte Anwendungen Kondensatoren, wobei dieses Kapselgehäuse 20 lagegenau im Sensorkopf 4 positioniert ist, um den Abstand zwischen dem hier nicht dargestellten Encoder 2 und dem Magnetfeld-Sensorelement 6 (Lesekopf) der Sensoreinheit 5 möglichst optimal für die Ablesung einzustellen. Dazu sind an dem Gehäuse 20 Fixierhilfen 22 vorgesehen. Diese können an das Kapselgehäuse 20 angespritzt sein, also im gleichen Verfahrensschritt wie die Fertigung des Gehäuses 20 vorgesehen sein.

Alternativ können die Fixierhilfen 22 als separates Gehäuseteil in der Art von Schalenpaaren an das Gehäuse 20 angeklebt oder als Einlegeteil im Spritzwerkzeug zur Umspritzung der Sensoreinheit 5 vorgesehen werden.

Um eine Dichtigkeit der Umspritzung 18 gegenüber äußeren Einflüssen im Betrieb des Kraftfahrzeuges zu erreichen, sollte eine Beschichtung des Kapselgehäuses 20 mit angeordneten Fixierhilfen 22 mit einem geeigneten Material, beispielsweise mit PU, erfolgen. Denn das Kapselgehäuse 20 besteht üblicherweise aus Epoxidharz, so dass eine spätere Umspritzung eine Beschichtung des Kapselgehäuses 20 benötigt, um eine Dichtigkeit zwischen Kapselgehäuse 20 und der aus thermoplastischem Material bestehenden Umspritzung 18 zu erzielen. Diese Beschichtung sollte bevorzugt aus dem gleichen oder einem weicheren Werkstoff als die spätere Umspritzung 18 erfolgen, damit eine Art Verschweißung zwischen den beiden Materialien erreicht werden kann.

Des Weiteren sollte die Umspritzung 18 die Fixierhilfen 22 mit einem Spiel, das bei maximal 2/10 mm liegt, zwischen äu-βerem Ende der Fixierhilfen 22 und der Begrenzung der Umspritzung 18 oder einem sehr geringen Übermaß der Umspritzung 18 gegenüber der Fixierhilfen 22, also mit einer elastischen Verformung der Fixierhilfen 22, derart umschließen, dass eine Druckausübung und/oder Pressung der Sensoreinheit 5 bei Schließen des Umspritzungswerkzeuges vermieden wird. Dazu kann auch ein konischer, sich nach außen verjüngender Verlauf der Fixierhilfen 22 vorgesehen sein, so dass die Kontaktstellen nach außen möglichst klein gehalten sind. Denn durch eine harte Pressung könnte ansonsten eine empfindliche Elektronik im Inneren der Umspritzung beschädigt oder zerstört werden.

Außerdem ist bei einem vorhandenen Spiel zwischen den Fixierhilfen 22 und dem Umspritzwerkzeug sichergestellt, dass zumindest auf einer Seite des Kapselgehäuses 20 eine vollständige Umspritzung auch der Fixierhilfen 22 gesichert ist und an dieser Stelle durch die Umspritzung 18 eine Dichtigkeit gegen beispielsweise Eindringen von Feuchtigkeit erreicht wird.

Auf der gegenüberliegenden Seite könnte die Fixierhilfe 22 durch das beim Umspritzvorgang unter Druck in das Werkzeug geleitete Umspritzungsmaterial gegen die Wand des Werkzeuges gedrückt werden, wodurch an dieser Stelle eine Kontaktierung am Werkzeug und somit eine Undichtigkeitsstelle bestehen kann. Daher ist für einen solchen Fall eine Beschichtung ebenfalls vorteilhaft.

Geeignete Verfahren, um eine Dichtigkeit des späteren Gesamtbauteils über die Beschichtung des Kapselgehäuses 20 sicherzustellen, können sein:
- Beschichtung mit PU (Polyurethan) über Tauchen oder Spritzen,
- Montage von PU-Schalen oder in Form eines Schlauchs, oder
- Montage als Geflecht,
   wobei beide Varianten der Verwendung von PU-Schalen hier nicht dargestellt sind,
   oder
- Verwendung des späteren Materials der Umspritzung 18 der Sensoreinheit 5 als Beschichtungsmaterial anstelle von PU, beispielsweise Polyamid.

Alternativ oder zusätzlich zu den am Kapselgehäuse 20 angeordneten Fixierhilfen 22 kann auch am Leadframe 24 eine Fixierhilfe 26 angeordnet werden. Diese Fixierhilfe 26 kann als fertiges Bauteil vorgesehen sein oder kann angespritzt, angeklebt oder angeklemmt sein. Dazu kann sie beispielsweise von der Seite aufgeschoben werden. Durch die Anordnung der Fixierhilfe 26 am Leadframe 24 könnte für das Kapselgehäuse 20 eine kostengünstige Standardumspritzung ausgewählt werden, auch wenn dieses nicht über die am Kapselgehäuse 20 angeordneten Fixierhilfen 22 verfügt. Da der Leadframe 24 fest mit dem Kapselgehäuse 20 der Sensoreinheit 5 verbunden ist, erfüllt die Fixierhilfe 26 die Voraussetzungen, die für eine lagegenaue Positionierung der Sensoreinheit 5 im Sensorkopf 4 gefordert sind.

Des Weiteren ist eine Fixierhilfe 28 am Leadframe 24 denkbar. Diese kann ebenfalls durch Anspritzen, Ankleben oder Anklemmen am Leadframe 24 angeordnet sein, wobei eine Anspritzung in einem Arbeitsgang mit der Sensoreinheit 5 bevorzugt würde. Die geometrische Ausbildung der Fixierhilfe 28 erfüllt zwei Anforderungen: Zum einen ist sie derart geformt, dass sie Aufnahmen für Werkzeugstifte 30 aufweist und für den Umspritzvorgang über diese Werkzeugstifte 30 lagegenau gehalten wird. Die Werkzeugstifte 30 werden nach erfolgtem Umspritzungsvorgang wieder herausgezogen.

Außerdem stellt die Fixierhilfe 28 nach erfolgter Außenumspritzung eine Zugentlastung auch bei Zug an der aus dem Sensorkopf 4 herausgeführten Kabelzuleitung 12 und/oder dem Leadframe 24 sicher. Selbst wenn der Leadframe 24 zum Anschluss an die Systeme des Kraftfahrzeugs mit einem Kontaktstecker versehen ist, kann es bei Servicearbeiten und/oder einem Austausch zu einer Zug- und Druckbelastung in Längsrichtung des Leadframes 24 kommen, die durch die Ausformung der Fixierhilfe 28 von der Sensoreinheit 5 ferngehalten wird.

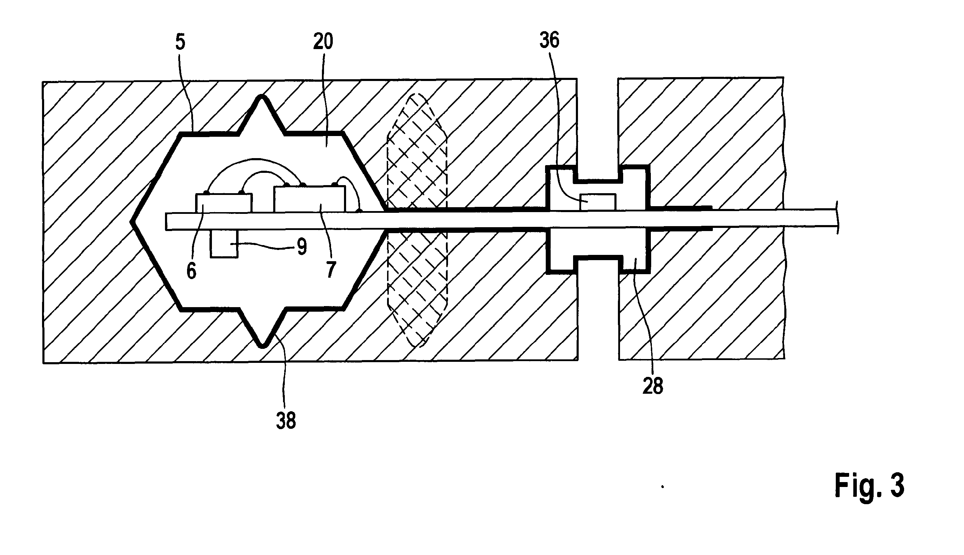

Die Fig. 3 zeigt eine zu der in der Fig. 2 gezeigten Anordnung alternative Anordnung der Bauelemente, wobei weitere Ausführungs- und Anordnungsformen denkbar sind.

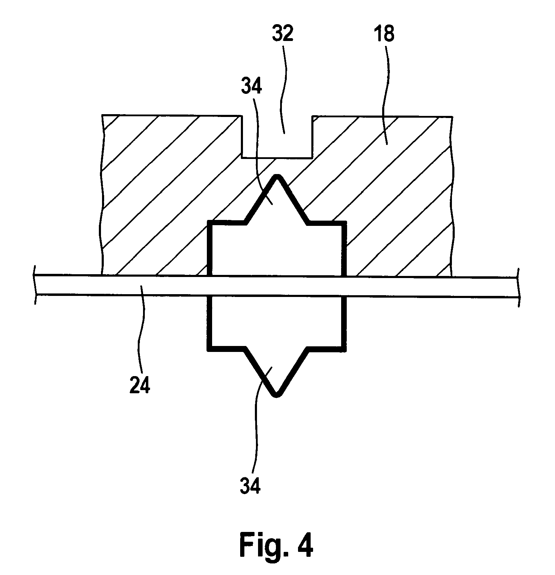

In der Fig. 4 ist eine zur Fixierhilfe 28 alternative Fixierhilfe 34 zur Anordnung am Leadframe 24 beschrieben. Im Umspritzwerkzeug sind Erhebungen 32 vorgesehen, die beim Umspritzen eine Ausnehmung in der Umspritzung 18 bewirken. Die in der Fig. 4 dargestellten Fixierhilfen 34 sorgen dafür, dass durch die Erhebungen 32 des Umspritzwerkzeuges der Leadframe 24 und somit die Sensoreinheit 5 positioniert und während des Umspritzvorganges lagegenau quer zur Längsrichtung des Leadframes 24 gehalten wird.

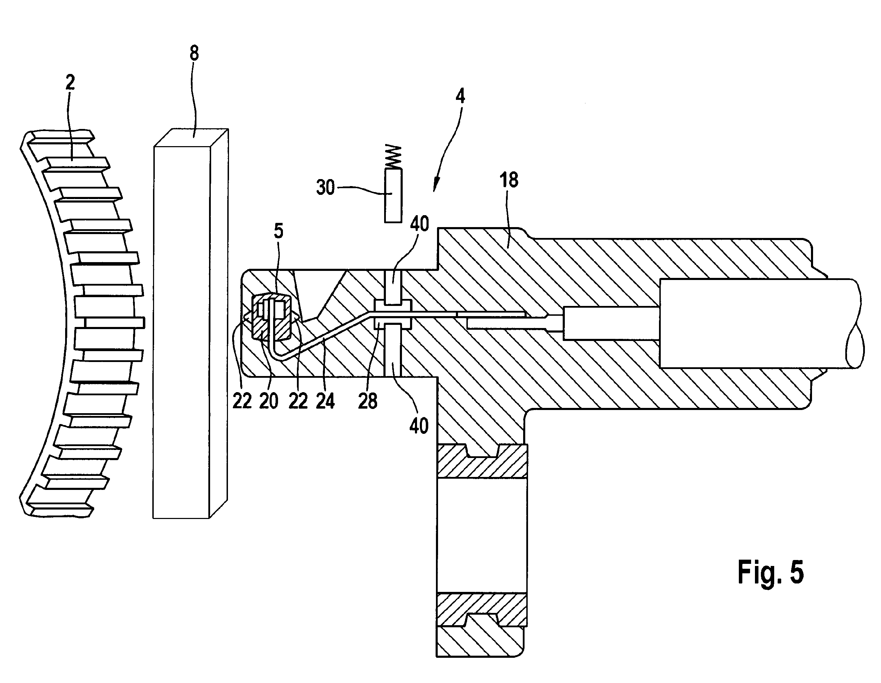

Die Fig. 5 stellt das Zusammenspiel der einzelnen Elemente schematisch dar. Der Sensorkopf 4 ist derart positioniert, dass er von dem Encoder 2 durch einen geeignet dimensionierten Luftspalt 8 getrennt ist. Die Sensoreinheit 5 ist über die Fixierhilfen 22 am Kapselgehäuse geeignet positioniert. Die Fixierhilfen 28 am Leadframe 24 sorgen sowohl für eine lagegenaue Positionierung im Fertigungsprozess als auch für eine Zugentlastung am fertigen Bauteil.

Allerdings könnte jetzt, nach Herausziehen der Werkzeugstifte 30 aus der Umspritzung 18, an den Kontaktstellen zwischen der Fixierhilfe 28 und den Werkzeugstiften 30 eine Undichtigkeit entstehen. Daher soll durch eine Beschichtung der Sensoreinheit 5 für die genannten Kontaktstellen eine Dichtigkeit erreicht werden. Für den Fall, dass diese Beschichtung keine Dichtigkeit erzielt, sind die durch die Führung für die Werkzeugstifte 30 entstandenen Öffnungen 40 durch eine geeignete Maßnahme zu verschließen.

### Bezugszeichenliste

- 1: Raddrehzahlsensor-System
- 2: Encoder
- 4: Sensor(-kopf)
- 5: Sensoreinheit
- 6: Magnetfeld-Sensorelement (Lesekopf)
- 7: ASIC
- 8: Luftspalt
- 9: Magnet
- 10: Crimpkontakte
- 12: elektrischer Leiter
- 14: Schutzumhüllung
- 16: Carrier
- 18: Sensorumspritzung
- 19: Stifte
- 20: Kapselgehäuse
- 22: Fixierhilfen am Kapselgehäuse in Y- und Z-Richtung
- 24: Leadframe
- 26: Fixierhilfen am Leadframe I in Y- und Z-Richtung
- 28: Fixierhilfen Leadframe II
- 30: Werkzeugstifte
- 32: Erhebung Werkzeug
- 34: Fixierhilfen am Leadframe III in Y- und Z-Richtung
- 36: Elektronisches passives Zusatzbauteil
- 38: Beschichtung

## Patentansprüche

1. Sensoreinheit (5) mit mindestens einem Magnetfeld-Sensorelement (6), mindestens einem ASIC (7) und mindestens einem Magneten (9) auf mindestens einem Leadframe (24), wobei alle Elemente in einem Kapselgehäuse (20) angeordnet sind, das von einer Sensorumspritzung (18) umgeben ist, **dadurch gekennzeichnet, dass**
das Kapselgehäuse (20) eine Anzahl von in ihren Außenabmessungen an eine der Sensorumspritzung (18) zugeordnete Spritzgussform angepassten Fixierhilfen (22) aufweist, wobei die Fixierhilfen so ausgebildet sind, dass sie die lagegenaue Position des Sensorelements dadurch sicherstellen, dass sie sich im Werkzeug der Sensorendumspritzung abstützen.

2. Sensoreinheit (5) nach Anspruch 1, **dadurch gekennzeichnet, dass** deren Fixierhilfen (22) an das Kapselgehäuse (20) angeformt sind.

3. Sensoreinheit (5) nach Anspruch 1, **dadurch gekennzeichnet, dass** deren Fixierhilfen (22) in Art von Schalenpaaren an das Kapselgehäuse (20) angelegt sind.

4. Sensoreinheit (5) nach Anspruch 1, **dadurch gekennzeichnet, dass** deren Fixierhilfen (22) in Art von Schalenpaaren an das Kapselgehäuse (20) angeklebt sind.

5. Sensoreinheit (5) nach mindestens einem der Ansprüche 1 bis 4, **dadurch gekennzeichnet, dass** an mindestens einem in das Kapselgehäuse (20) führenden Leadframe (24) eine Anzahl von nicht mit dem Kapselgehäuse (20) verbundenen oder an diesem angeordneten Fixierhilfen (26, 28, 34) angeordnet ist.

6. Sensoreinheit (5) nach mindestens einem der Ansprüche 1 bis 5, **dadurch gekennzeichnet, dass** deren Fixierhilfen (22, 26, 28, 34) elastisch ausgeführt sind.

7. Sensoreinheit (5) nach mindestens einem der Ansprüche 1 bis 6, **dadurch gekennzeichnet, dass** an eine oder mehrere der Fixierhilfen (26, 28) eine Druck- und/oder Zugentlastung angeordnet ist.

8. Sensoreinheit (5) nach Anspruch 7, **dadurch gekennzeichnet, dass** deren Zug- und Druckentlastung in Richtung der X-Achse angeordnet ist.

9. Sensoreinheit (5) nach mindestens einem der Ansprüche 1 bis 8, **dadurch gekennzeichnet, dass** eine Beschichtung des Kapselgehäuses (20) vorgesehen ist.

10. Sensoreinheit (5) nach Anspruch 9, **dadurch gekennzeichnet, dass** als Werkstoff für die Beschichtung des Kapselgehäuses (20) der gleiche Werkstoff wie für die Sensorumspritzung (18) vorgesehen ist.

11. Sensoreinheit (5) nach mindestens einem der Ansprüche 5 bis 10, **dadurch gekennzeichnet, dass** eine Beschichtung einer Anzahl von Fixierhilfen (20, 26, 28, 34) vorgesehen ist.

12. Sensoreinheit (5) nach Anspruch 11, **dadurch gekennzeichnet, dass** als Werkstoff für die Beschichtung der Fixierhilfen (20, 26, 28, 34) der gleiche Werkstoff wie für die Sensorumspritzung (18) vorgesehen ist.

## Claims

1. Sensor unit (5) with at least one magnetic field sensor element (6), at least one ASIC (7) and at least one magnet (9) on at least one leadframe (24), all the elements being arranged in a capsule housing (20) that is surrounded by a sensor encapsulation (18), **characterized in that** the capsule housing (20) has a number of fixing aids (22) adapted in their outer dimensions to an injection mold assigned to the sensor encapsulation (18), wherein the fixing aids are designed in such a way that they ensure the exact position of the sensor element by supporting themselves in the mold of the final sensor encapsulation.

2. Sensor unit (5) according to Claim 1, **characterized in that** the fixing aids (22) thereof are formed on the capsule housing (20).

3. Sensor unit (5) according to Claim 1, **characterized in that** the fixing aids (22) thereof are placed against the capsule housing (20) in the manner of pairs of shells.

4. Sensor unit (5) according to Claim 1, **characterized in that** the fixing aids (22) thereof are adhesively attached to the capsule housing (20) in the manner of pairs of shells.

5. Sensor unit (5) according to at least one of Claims 1 to 4, **characterized in that** a number of fixing aids (26, 28, 34) not connected to the capsule housing (20) or arranged on the latter are arranged on at least one leadframe (24) leading into the capsule housing (20).

6. Sensor unit (5) according to at least one of Claims 1 to 5, **characterized in that** the fixing aids (22, 26, 28, 34) thereof are elastically configured.

7. Sensor unit (5) according to at least one of Claims 1 to 6, **characterized in that** a compression and/or tension relief is arranged on one or more of the fixing aids (26, 28).

8. Sensor unit (5) according to Claim 7, **characterized in that** the tension and compression relief thereof is arranged in the direction of the X axis.

9. Sensor unit (5) according to at least one of Claims 1 to 8, **characterized in that** coating of the capsule housing (20) is provided.

10. Sensor unit (5) according to Claim 9, **characterized in that** the same material as for the sensor encapsulation (18) is provided as the material for the coating of the capsule housing (20).

11. Sensor unit (5) according to at least one of Claims 5 to 10, **characterized in that** coating of a number of fixing aids (20, 26, 28, 34) is provided.

12. Sensor unit (5) according to Claim 11, **characterized in that** the same material as for the sensor encapsulation (18) is provided as the material for the coating of the fixing aids (20, 26, 28, 34).

## Revendications

1. Unité de détection (5) comprenant au moins un élément de détection de champ magnétique (6), au moins un ASIC (7) et au moins un aimant (9) sur au moins une grille de connexion (24), tous les éléments étant disposés dans un boîtier d'encapsulation (20) qui est entouré d'un surmoulage de capteur (18), **caractérisée en ce que** le boîtier d'encapsulation (20) présente une pluralité d'aides à la fixation (22) dont les dimensions extérieures sont adaptées à un moule de moulage par injection associé au surmoulage de capteur (18), les aides à la fixation étant configurées de telle sorte qu'elles garantissent le positionnement précis de l'élément de détection par le fait qu'elles s'appuient dans l'outil de surmoulage final du capteur.

2. Unité de détection (5) selon la revendication 1, **caractérisée en ce que** ses aides à la fixation (22) sont façonnées sur le boîtier d'encapsulation (20).

3. Unité de détection (5) selon la revendication 1, **caractérisée en ce que** ses aides à la fixation (22) sont appliquées sous la forme d'une paire de coques sur le boîtier d'encapsulation (20).

4. Unité de détection (5) selon la revendication 1, **caractérisée en ce que** ses aides à la fixation (22) sont collées sous la forme d'une paire de coques sur le boîtier d'encapsulation (20).

5. Unité de détection (5) selon au moins l'une des revendications 1 à 4, **caractérisée en ce que** sur au moins une grille de connexion (24) qui mène dans le boîtier d'encapsulation (20) est disposée une pluralité d'aides à la fixation (26, 28, 34) non reliées avec le boîtier d'encapsulation (20) ni disposées sur celui-ci.

6. Unité de détection (5) selon au moins l'une des revendications 1 à 5, **caractérisée en ce que** ses aides à la fixation (22, 26, 28, 34) sont réalisées de manière à être flexibles.

7. Unité de détection (5) selon au moins l'une des revendications 1 à 6, **caractérisée en ce qu'**un dispositif de décompression et/ou anti-traction est disposé sur une ou plusieurs de ses aides à la fixation (26, 28).

8. Unité de détection (5) selon la revendication 7, **caractérisée en ce que** son dispositif de décompression et/ou anti-traction est disposé dans la direction de l'axe X.

9. Unité de détection (5) selon au moins l'une des revendications 1 à 8, **caractérisée en ce qu'**il est prévu un revêtement du boîtier d'encapsulation (20).

10. Unité de détection (5) selon la revendication 9, **caractérisée en ce que** le matériau prévu pour le revêtement du boîtier d'encapsulation (20) est le même matériau que pour le surmoulage de capteur (18).

11. Unité de détection (5) selon au moins l'une des revendications 5 à 10, **caractérisée en ce qu'**il est prévu un revêtement d'une pluralité d'aides à la fixation (20, 26, 28, 34).

12. Unité de détection (5) selon la revendication 11, **caractérisée en ce que** le matériau prévu pour le revêtement des aides à la fixation (20, 26, 28, 34) est le même matériau que pour le surmoulage de capteur (18).
